# EUROPEAN PATENT SPECIFICATION

(11) **EP 2 326 520 B1**
(45) Date of publication and mention of the grant of the patent: **18.01.2012**
(21) Application number: 09785997.9
(22) Date of filing: 09.07.2009
(51) Int. Cl.: B21D 53/88, B23P 15/00, B60G 7/00

(54) **METHOD FOR STAMPING AN ARM FOR CAR SUSPENSIONS**
VERFAHREN ZUM STANZEN EINES ARMS FÜR KRAFTFAHRZEUGAUFHÄNGUNGEN
PROCÉDÉ DE DÉCOUPE D'UN BRAS POUR SUSPENSIONS AUTOMOBILES

(30) Priority: 11.07.2008 IT BO20080435
(43) Date of publication of application: 01.06.2011
(73) Proprietor: Tiberina Solutions S.R.L., 06019 Umbertide (IT)
(72) Inventor: CASTORI, Lorenzo, I-06019 Umbertide (IT)
(74) Representative: Manconi, Stefano
(86) International application number: PCT/IB2009/006198
(87) International publication number: WO 2010/004414

(56) References cited:
- EP-A- 1 125 774
- JP-A- 2002 337 525
- JP-A- 2004 042 079
- US-A- 5 662 349

## Description

### TECHNICAL FIELD

The present invention relates to a method for stamping an arm for car suspensions, according to the preamble of claim 1.

### BACKGROUND ART

In the automobile sector, a prior art arm for car suspensions is manufactured by means of a method comprising the following steps:
detaching two shaped blanks from a substantially flat plate;
bending each blank so as to define a relative concave central portion limited by a relative peripheral edge;
bending a first portion of the peripheral edge of each blank around a first containment matrix;
drilling a second and a third portion of the peripheral edge of each blank in order to carry out a first and, respectively, a second coupling hole;
bending a fourth portion of the peripheral edge of each blank around a second containment matrix and in a reference plane placed according to an angle of substantially 90° with respect to a containment plane of said blank; and
welding the two blanks together along the fourth portion in order to obtain the arm and so that the relative first portions define a seat for coupling with a first bush, the relative first holes define a seat for coupling with a second bush, and the relative third holes define a seat for coupling with a joint.

The known method of the type described above has some drawbacks mainly owing to the fact that the arm is defined by two blanks, and is thus relatively heavy and expensive, it involves the use of said containment matrices and the two blanks must be welded, which is a complex and expensive process.

Document JP-2004042079-A relates to a method for manufacturing suspension parts according to the preamble of claim 1. After forming the base stocks for the suspension parts having common cross-sectional shape, the amount of bending for making the base stocks into a shape in accordance with the kinds of cars is selected wand changed. An approximate plane is formed in the intermediate part situated between end parts by bending the base stock having the end parts situated in the longitudinal direction respectively in the vicinity of the supporting points of the end parts.

### DISCLOSURE OF INVENTION

It is an object of the present invention to provide a method for stamping an arm for car suspensions that overcomes the drawbacks described above and is simple and inexpensive to implement.

According to the present invention there is provided a method for stamping an arm for car suspensions as set forth in claim 1. Preferred embodiments of the invention are defined in the dependent claims.

### BRIEF DESCRIPTION OF THE DRAWINGS

The present invention will now be described with reference to the accompanying drawings, illustrating an embodiment thereof, in which:
figure 1 is a first perspective view of a preferred embodiment of an arm for car suspensions which can be manufactured by the method according to the present invention;
figure 2 is a second perspective view of the arm of figure 1;
figure 3 is a schematic diagram of a sequence of steps in order to produce the arm of figures 1 and 2;
figure 4 is a cross-section along the line IV-IV of figure 3g;
figure 5 is a cross-section along the line V-V of figure 3g;
figure 6 is a cross-section along the line VI-VI of figure 3h; and
figure 7 is a cross-section along the line VII-VII of figure 3h.

### BEST MODE FOR CARRYING OUT THE INVENTION

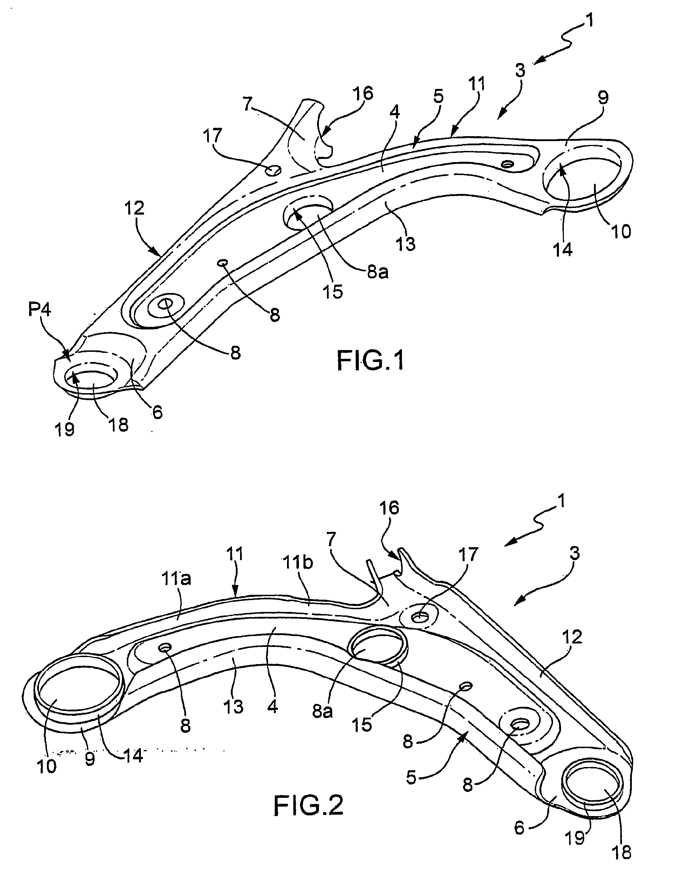

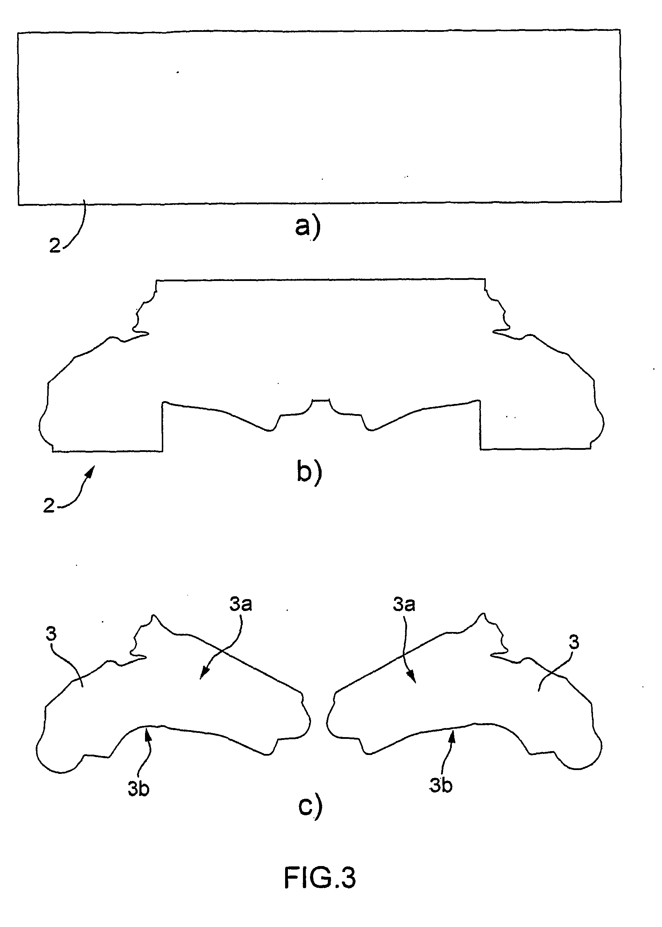

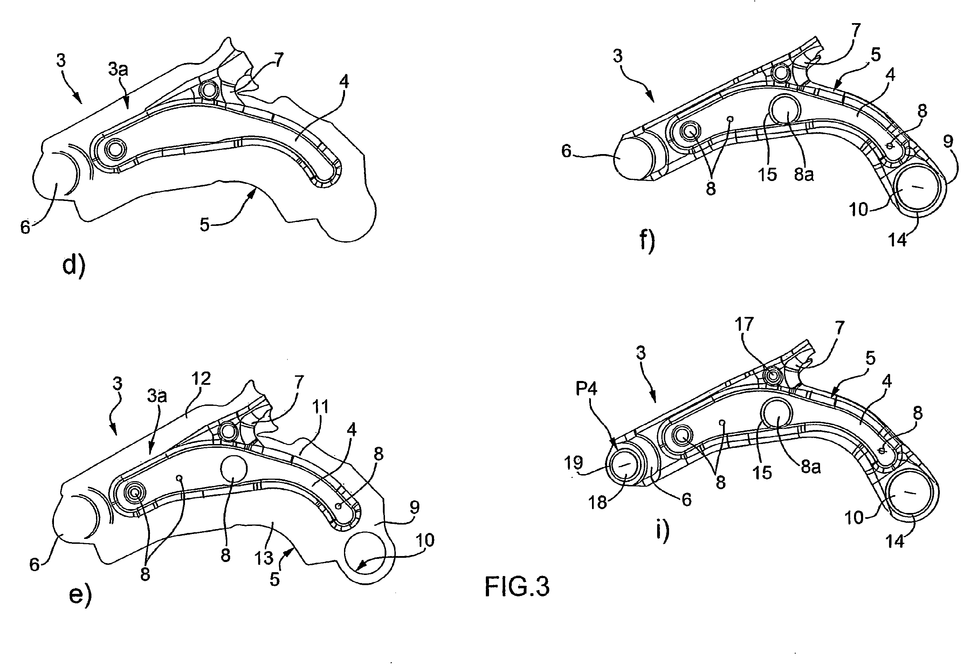

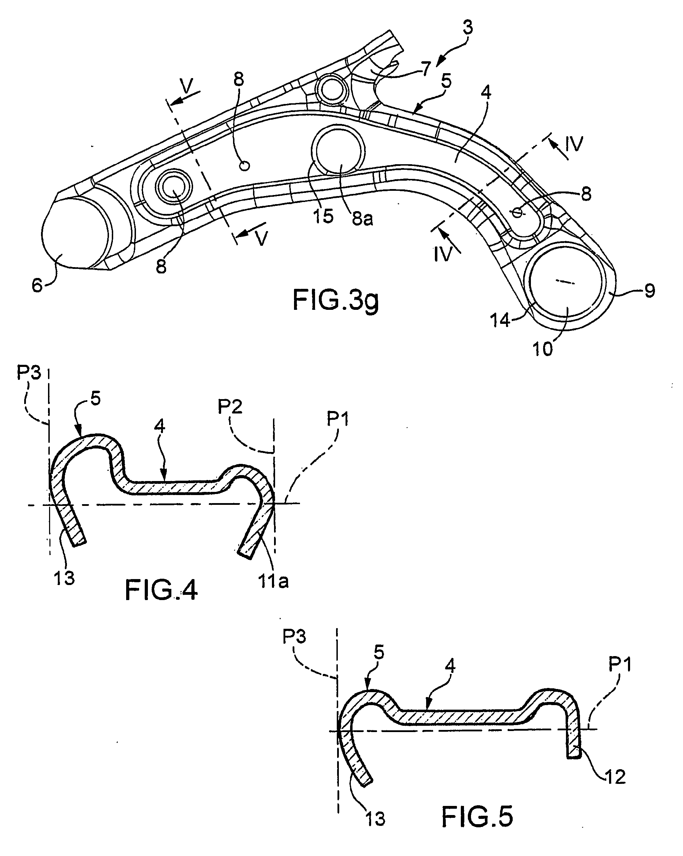

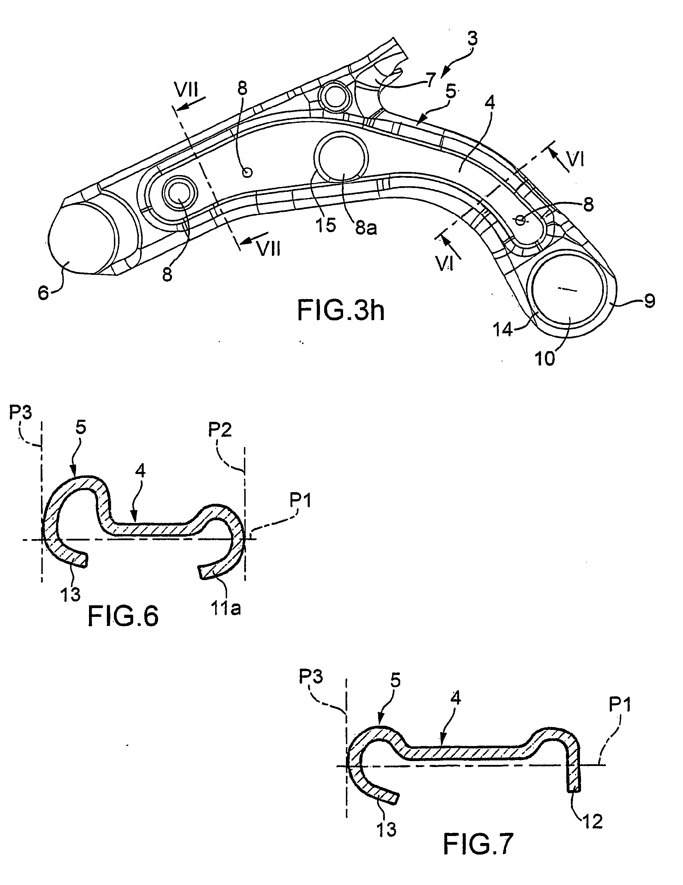

With reference to figures 1 and 2, designated as a whole by number 1 is an arm for car suspensions, which is formed in one piece, has an arched shape, and is stamped in a press (not illustrated) starting from a flat plate 2 (figure 3a), which is substantially rectangular in shape, and is made, in this case, of 3 millimetre-thick hot-rolled UHSS Multiphase steel manufactured and sold by ArcelorMittal under product code number M800HY.

As illustrated in figures 3b and 3c, two successive blanking operations are performed to detach two blanks 3 from the plate 2, each one of which is limited, in its initial shape, by two largest sides 3a and 3b which are substantially flat and parallel to each other, and is stamped to define a relative arm 1.

In a third step, each blank 3 is drawn starting from its side 3a, with a first given bending radius, and in correspondence with a central portion 4 thereof limited externally by a peripheral edge 5 extending around said portion 4, an end portion 6 of the edge 5, and an intermediate portion 7 of said edge 5 (figure 3d).

According to that illustrated in figure 3e, in a fourth step, the portions 4, 6 and 7 of the edge 5 are drawn again with a second bending radius smaller than the first bending radius; the portion 4 is drilled to carry out a plurality of functional holes 8 (in this case four holes 8); and the edge 5 is drilled in correspondence with an end portion thereof 9 opposite to the portion 6 to carry out a hole 10 suitable for coupling, in use, with a first bush (not illustrated).

After completing the process of drawing the portions 4, 6, and 7 and drilling the portion 9, the edge 5 comprises a portion 11 extending between the portion 7 and the hole 10, a portion 12 extending between the portions 6 and 7, and a portion 13 extending between the portion 6 and the hole 10 on the opposite side of the portions 11 and 12 with respect to the portion 4 (figure 3e).

With reference to figures 2 and 3f, in a fifth step, the edge of the hole 10 and of one of the holes 8 (hereinafter designated by 8a) is taken off, i.e. these are provided with respective annular collars 14, 15 which protrude from the side 3b; and, in a sixth step, the portions 11, 12, 13 of the edge 5 are bent into relative first bent configurations, in which the portions 11, 12, and 13 are placed according to a first bending angle of substantially 90° with respect to a reference plane P1 (figure 4) parallel to the sides 3a, 3b.

According to that illustrated in figures 2, 3g, 4, and 5, in a seventh step, a first part 11a of the portion 11 and the portion 13 are bent without a containment matrix starting from the relative first bent shapes, below the blank 3, and into relative second bent shapes, in which the part 11a and the portion 13 are placed with a second bending angle different from 0° with respect to relative reference planes P2, P3 which are substantially orthogonal to the plane P1.

With reference to figures 2, 3h, 6, and 7, in an eighth step, the part 11a and the portion 13 are bent again without a containment matrix starting from the relative second bent shapes, below the blank 3, and into relative third bent shapes, in which the part 11a and the portion 13 are placed according to a third bending angle different from 0° and greater than the second bending angle with respect to the relative planes P2, P3.

With regard to the above description, it should be noted that the portion 12 and a second part 11b of the portion 11 adjacent to the part 11a define, in the relative first bent shapes, a seat 16 (figures 1 and 2), in the form of an arc of a circle, and suitable for coupling, in use, with a second bush (not illustrated).

With reference to figures 1, 2, and 3i, in a ninth step, the portion 6 is bent in a reference plane P4 placed according to an angle different from 0° with respect to the plane P1; and the portion 7 is drilled in order to carry out a hole 17 defining, in use, a reference hole for controlling the arm 1 mounting interaxes.

In a tenth step, the blank 3 is placed with the plane P4 substantially horizontal; and the portion 6 is drilled to carry out a hole 18 suitable for coupling, in use, with a joint (not illustrated).

In an eleventh step, the edge of the hole 18 is taken off, i.e. it is provided with an annular collar 19 which protrudes from the side 3b.

In a twelfth step, the hole 18 and the collar 19 are gauged to achieve the tolerance required for coupling with said joint (not illustrated).

Finally, in a thirteenth step, the seat 16 is machined to remove the chippings in order to obtain the shape and tolerance required for coupling with said second bush (not illustrated).

Using the method described above it is thus possible to obtain a monocoque arm 1, which is box-shaped and requires no additional welding operations after the stamping process.

## Claims

1. Method for stamping an arm for car suspensions starting from a substantially flat plate (2), comprising the step of
- detaching a shaped blank (3) from the plate (2), said blank (3) being limited, in its initial shape, by two sides (3a, 3b) which are substantially flat and parallel to each other; said method being **characterized in that** it further comprises the following steps:
- drawing a central portion (4) of the blank (3) limited by a peripheral edge (5) of the blank (3) itself;
- drawing a first portion (7) of the peripheral edge (5) for coupling with a first bush;
- drawing a second portion (6) of the peripheral edge (5) for coupling with a joint;
- drilling a third portion (9) of the peripheral edge (5) in order to carry out a first coupling hole (10) with a second bush;
- bending a fourth portion (11, 12, 13) of the peripheral edge (5) according to a first bending angle of substantially 90° with respect to a first reference plane (P1) substantially parallel to said sides (3a, 3b) ;
- bending without a containment matrix at least a part (11a, 13) of said fourth portion (11, 12, 13) below the blank (3) starting from the first bending angle, and with a second bending angle different from 0° with respect to at least a second reference plane (P2, P3) which is substantially orthogonal to the first reference plane (P1); and
- drilling said second portion (6) in order to carry out a second coupling hole (18) with said joint.

2. Method according to claim 1, further comprising the following step:
- bending said second portion (6) in a third reference plane (P4) placed according to an angle different from 0° with respect to the first reference plane (P1).

3. Method according to claim 2, further comprising the following step:
- horizontally orienting said third reference plane (P4) before drilling said second hole (18).

4. Method according to one of the preceding claims, wherein the central portion (4) and said first and second portion (7, 6) are drawn in a first drawing step with a first bending radius and in a second drawing step with a second bending radius smaller than the first one.

5. Method according to one of the preceding claims, further comprising the following step:
- drilling the central portion (4) for carrying out a plurality of third holes (8).

6. Method according to claim 5, further comprising the following step:
- taking off the edge of said first and second holes (10, 18) and at least part (8a) of said third holes (8).

7. Method according to one of the preceding claims, comprising the following steps:
- bending without a containment matrix said part (11a, 13) below the blank (3) starting from the first bending angle and with said second bending angle; and
- bending without a containment matrix said part (11a, 13) below the blank (3) starting from the second bending angle and with a third bending angle larger than the second bending angle.

8. Method according to one of the preceding claims, further comprising the following step:
- gauging said second hole (18) by means of a chipping machining.

9. Method according to one of the preceding claims, further comprising the following step:
- drilling said first portion (7) in order to carry out a fourth hole (17) defining, in use, a reference hole for controlling the arm mounting interaxes.

10. Method according to one of the preceding claims, wherein the first portion (7) defines, together with a further part (11b, 12) of they fourth portion (11, 12, 13) placed according to the first bending angle, a seat (16) for said first bush, said method further comprising the following step:
- finishing the seat (16) by means of a chipping machining.

11. Method according to one of the preceding claims, wherein the arm is made with only one said blank (3).

## Patentansprüche

1. Verfahren zum Umformen eines Arms für Fahrzeugaufhängungen beginnend von einer im Wesentlichen flachen Platte (2), welches folgende Schritte aufweist:
Ablösen eines geformten Rohteils (3) von der Platte (2), wobei das Rohteil (3) bezüglich seiner Anfangsform durch zwei Seiten (3a, 3b) begrenzt ist, die im Wesentlichen flach und parallel zueinander sind;
wobei das Verfahren **dadurch gekennzeichnet ist, dass** es weite die folgenden Schritte aufweist:
Ziehen eines mittigen Teils (4) des Rohteils (3), welches durch eine Umfangskante (5) des Rohteils (3) selbst begrenzt ist;
Ziehen eines ersten Teils (7) der Umfangskante (5) zum Koppeln mit einer ersten Hülse;
Ziehen eines zweiten Teils (6) der Umfangskante (5) zum Koppeln mit einem Gelenk;
Bohren bzw. Stanzen eines dritten Teils (9) der Umfangskante (5), um ein erstes Koppelungsloch (10) mit einer zweiten Hülse auszuführen;
Biegen eines vierten Teils (11, 12, 13) der Umfangskante (5) gemäß einem ersten Biegewinkel von im Wesentlichen 90° bezüglich einer ersten Referenzebene (P1) im Wesentlichen parallel zu den Seiten (3a, 3b);
Biegen von zumindest einem Teil (11 a, 13) des vierten Teils (11, 12,13) unter das Rohteil (3) beginnend vom ersten Biegewinkel ohne eine Containment- bzw. Umschließungsmatrix, und mit einem zweiten Biegewinkel,
der anders als 0° bezüglich zumindest einer zweiten Referenzebene (P2, P3) ist, die im Wesentlichen senkrecht zur ersten Referenzebene (P1) ist; und
Bohren bzw. Stanzen des zweiten Teils (6), um ein zweites Kupplungsloch (18) mit dem Gelenk auszuführen.

2. Verfahren nach Anspruch 1, welches weiter den folgenden Schritt aufweist:
Biegen des zweiten Teils (6) in einer dritten Referenzebene (P4), die gemäß einem von 0 unterschiedlichen Winkel bezüglich der ersten Referenzebene (P1) angeordnet ist.

3. Verfahren nach Anspruch 2, welches weiter den folgenden Schritt aufweist:
horizontales Orientieren der dritten Referenzebene (P4) vor dem Bohren bzw. Stanzen des zweiten Loches (18).

4. Verfahren nach einem der vorhergehenden Ansprüche, wobei der mittige Teil (4) und der erste und der zweite Teil (7, 6) in einem ersten Ziehschritt mit einem ersten Biegeradius und in einem zweiten Ziehschritt mit einem zweiten Biegeradius gezogen werden, welcher kleiner ist als der erste Biegeradius.

5. Verfahren nach einem der vorhergehenden Ansprüche, welches weiter folgenden Schritt aufweist:
Bohren des mittigen Teils (4) zum Ausführen einer Vielzahl von dritten Löchern (8).

6. Verfahren nach Anspruch 5, welches weiter den folgenden Schritt aufweist:
Abnehmen der Ecke der ersten und zweiten Löcher (10, 18) und zumindest eines Teils (8a) der dritten Löcher (8).

7. Verfahren nach einem der vorhergehenden Ansprüche, welches die folgenden Schritte aufweist:
Biegen des Teils (11a, 13) unter das Rohteil (3) beginnend vom ersten Biegewinkel und mit dem zweiten Biegewinkel ohne eine Containment- bzw. Umschließungsmatrix; und
Biegen des Teils (11a, 13) unter das Rohteil (3) beginnend vom zweiten Biegewinkel und mit einem dritten Biegewinkel, der größer ist als der zweite Biegewinkel, ohne eine Containment- bzw. Umschließungsmatrix.

8. Verfahren nach einem der vorhergehenden Ansprüche, welches weiter den folgenden Schritt aufweist:
Kalibrieren des zweiten Loches (18) mittels einer Entgratungs- bzw. Nibbelmaschine.

9. Verfahren nach einem der vorhergehenden Ansprüche, welches weiter den folgenden Schritt aufweist;
Bohren bzw. Stanzen des ersten Teils (7), um ein viertes Loch (17) auszuführen, welches beim Gebrauch ein Referenzloch zum Steuern der Armmontagezwischenachsen definiert.

10. Verfahren nach einem der vorhergehenden Ansprüche, wobei der erste Teil (7) zusammen mit einem weiteren Teil (11 b, 12) des vierten Teils (11, 12, 13), der gemäß dem ersten Biegewinkel angeordnet ist, einen Sitz (16) für die erste Hülse definiert, wobei das Verfahren weiter den folgenden Schritt aufweist:
Endbearbeiten des Sitzes (16) mittels Entgratung bzw. Nibbeln.

11. Verfahren nach einem der vorhergehenden Ansprüche, wobei der Arm mit nur dem Rohteil (3) hergestellt wird.

## Revendications

1. Procédé pour emboutir un bras pour suspensions de voiture à partir d'une plaque sensiblement plate (2), comprenant l'étape consistant à :
détacher une ébauche formée (3) de la plaque (2), ladite ébauche (3) étant limitée, dans sa forme initiale, par deux côtés (3a, 3b) qui sont sensiblement plats et parallèles entre eux, ledit procédé étant **caractérisé en ce qu'**il comprend en outre les étapes suivantes :
étirer une partie centrale (4) de l'ébauche (3) limitée par un bord périphérique (5) de l'ébauche (3) elle-même ;
étirer une première partie (7) du bord périphérique (5) pour le couplage avec une première douille ;
étirer une deuxième partie (6) du bord périphérique (5) pour le couplage avec un joint ;
percer une troisième partie (9) du bord périphérique (5) afin de réaliser un premier trou de couplage (10) avec une deuxième douille ;
plier une quatrième partie (11, 12, 13) du bord périphérique (5) selon un premier angle de pliage sensiblement de 90° par rapport à un premier plan de référence (P1) sensiblement parallèle auxdits côtés (3a, 3b) ;
plier sans matrice de confinement, au moins une partie (11a, 13) de ladite quatrième partie (11, 12, 13) au-dessous de l'ébauche (3) à partir du premier angle de pliage, et avec un deuxième angle de pliage différent de 0° par rapport au moins à un deuxième plan de référence (P2, P3) qui est sensiblement orthogonal au premier plan de référence (P1) ; et
percer ladite deuxième partie (6) afin de réaliser un deuxième trou de couplage (18) avec ledit joint.

2. Procédé selon la revendication 1, comprenant en outre l'étape suivante consistant à :
plier ladite deuxième partie (6) dans un troisième plan de référence (P4) placé selon un angle différent de 0° par rapport au premier plan de référence (P1).

3. Procédé selon la revendication 2, comprenant en outre l'étape suivante consistant à :
orienter horizontalement ledit troisième plan de référence (P4) avant de percer ledit deuxième trou (18).

4. Procédé selon l'une quelconque des revendications précédentes, dans lequel la partie centrale (4) et lesdites première et deuxième parties (7, 6) sont étirées dans une première étape d'étirage avec un premier rayon de pliage et dans une deuxième étape d'étirage avec un deuxième rayon de pliage inférieur au premier.

5. Procédé selon l'une quelconque des revendications précédentes, comprenant en outre l'étape suivante consistant à :
percer la partie centrale (4) pour réaliser une pluralité de troisièmes trous (8).

6. Procédé selon la revendication 5, comprenant en outre l'étape suivante consistant à :
retirer le bord desdits premier et deuxième trous (10, 18) et au moins une partie (8a) desdits troisièmes trous (8).

7. Procédé selon l'une quelconque des revendications précédentes, comprenant les étapes suivantes consistant à :
plier sans matrice de confinement, ladite partie (11a, 13) au-dessous de l'ébauche (3) à partir du premier angle de pliage et avec ledit deuxième angle de pliage ; et
plier sans matrice de confinement, ladite partie (11a, 13) au-dessous de l'ébauche (3) à partir du deuxième angle de pliage et avec un troisième angle de pliage supérieur au deuxième angle de pliage.

8. Procédé selon l'une quelconque des revendications précédentes, comprenant en outre l'étape suivante consistant à :
calibrer ledit deuxième trou (18) au moyen d'un usinage de déchiquetage.

9. Procédé selon l'une quelconque des revendications précédentes, comprenant en outre l'étape suivante consistant à :
percer ladite première partie (7) afin de réaliser un quatrième trou (17) définissant, à l'usage, un trou de référence pour contrôler des axes intermédiaires de montage de bras.

10. Procédé selon l'une quelconque des revendications précédentes, dans lequel la première partie (7) définit, conjointement avec une partie supplémentaire (11b, 12) de la quatrième partie (11, 12, 13) placée selon le premier angle de pliage, un siège (16) pour ladite première douille, ledit procédé comprenant en outre l'étape suivante consistant à :
finir le siège (16) au moyen d'un usinage de déchiquetage.

11. Procédé selon l'une quelconque des revendications précédentes, dans lequel le bras est réalisé avec une seule desdites ébauches (3).
